# EUROPEAN PATENT APPLICATION

(11) **EP 4 012 060 A1**
(43) Date of publication of application: **15.06.2022**
(21) Application number: 20946867.7
(22) Date of filing: 21.08.2020
(51) Int. Cl.: C22C 14/00

(54) **TITANIUM-BASED ALLOY POWDER AND PREPARATION METHOD, AND PREPARATION METHOD FOR TITANIUM-BASED ALLOY WORKPIECE**

(30) Priority: 29.07.2020 CN 202010745072
(71) Applicant: University Of Science And Technology Beijing, Beijing 100083 (CN)
(72) Inventor: LU, Xin, Beijing 100083 (CN); XU, Wei, Beijing 100083 (CN); LIU, Bowen, Beijing 100083 (CN); WU, Yuan, Beijing 100083 (CN); YU, Aihua, Beijing 100083 (CN); ZHANG, Jiazhen, Beijing 100083 (CN); ZHANG, Ce, Beijing 100083 (CN); PAN, Yu, Beijing 100083 (CN); QU, Xuanhui, Beijing 100083 (CN)
(74) Representative: Hoffmann Eitle
(86) International application number: PCT/CN2020/110527
(87) International publication number: WO 2022/021507

(57) **Abstract**

The present invention provides a titanium-based alloy powder, a preparation method thereof, and a method for preparing a titanium-based alloy part. The composition of the titanium-based alloy powder is TiₐX_{b}M_{c}, where 0<a<100, 0<b≤5, 0≤c≤1, and a+b+c=100; X is interstitial atoms; M is at least one alloy element; and the titanium-based alloy powder is obtained by using the interstitial atoms and/or alloy elements to shape and micro-alloy hydride-dehydride titanium powder at a certain temperature. The prepared titanium-based alloy part has an ultra-fine grain microstructure and a heterogeneous nanostructure, and meanwhile has the characteristics of high strength and high ductility. Through high-temperature shaping, the sphericity and flow properties of non-spherical HDH titanium powder are significantly improved in the present invention, so as to obtain alloy powder suitable for the selective laser melting process; at the same time, by micro-alloying interstitial elements and alloy elements, the mechanical properties of the titanium-based alloy part are significantly improved, which has an important application prospect for the entire metal material field.

## Description

### TECHNICAL FIELD

The present invention relates to the technical field of metal materials and preparation thereof, and in particular to a titanium-based alloy powder, a preparation method thereof, and a method for preparing a titanium-based alloy part.

### BACKGROUND

Titanium is an important strategic metal, and is widely used in fields of aerospace, biomedical and military materials. The use of additive manufacturing technology to prepare titanium and its alloy materials can meet the needs of free design, lightweight and rapid development, and can effectively overcome the disadvantages of titanium alloy processing difficulty and high cost in traditional methods. However, atomized powder required for additive manufacturing inevitably has defects such as hollow powder, low yield (the yield of fine powder is commonly less than 35%), and the disadvantage of high cost (taking Ti-6Al-4V powder as an example, the price of atomized spherical powder is commonly higher than 2.5 million Yuan/ton). Therefore, it is of great significance to develop a low-cost, high-performance titanium-based alloy powder suitable for additive manufacturing process.

On the other hand, at present, the commonly used titanium-based alloys have the problem that cannot have both high strength and high ductility. For example, the Ti-6Al-4V alloy has high strength (>1000MPa), but its ductility is less than 10%; and pure titanium has higher ductility (>25%), but its strength is low (400~600MPa). Therefore, how to prepare a titanium-based alloy with both high strength and high ductility is the direction of unremitting efforts in manufacturing titanium and its alloys. At present, there are few reports at home and abroad on the preparation of titanium-based alloys with both high strength and high ductility by alloying. Wysocki et al. adjusted the O₂/Ar ratio in the atmosphere of selective laser melting process, in which when the oxygen content of SLM-Ti was increased to 0.50wt.%, the tensile strength was 830MPa, and the elongation after fracture was 16% (Wysocki B, Maj P, Krawczynska A, Rozniatowski K, Zdunek J, Kurzydlowski K J, Swieszkowski W. Microstructure and mechanical properties investigation of CP titanium processed by selective laser melting (SLM)[J]. Journal of Materials Processing Technology, 2017, 241:13-23.); Wang et al. used a mixed Ar/N₂ gas in the selective laser melting process to prepare a titanium part, which used 0.43wt.% N to form a homogeneous solid solution; under the action of solid solution strengthening and fine grain strengthening of N element, the tensile yield strength of the titanium part reached 797MPa and the elongation was 17.98% (Wang D W, Zhou YH, Shen J, Liu Y, Li D F, Zhou Q, Sha G, Xu P, Ebel T, Yan M. Selective laser melting under the reactive atmosphere: A convenient and efficient approach to fabricate ultrahigh strength commercially pure titanium without sacrificing ductility[J]. Materials Science & Engineering A, 2019, 762:138078). However, these methods all use atmosphere control during the preparation by the selective laser melting process to achieve the alloying of titanium parts, and they fail to further enhance the titanium-based alloys by the method of micro-alloying elements. In addition, in these researches, the powders used are spherical powders, which results in high cost.

The present application proposes to use hydride-dehydride (HDH) titanium-based alloy powder to prepare powder suitable for selective laser melting process, in which trace amounts of interstitial elements, for example N and O, and alloy elements are added to improve the strength and ductility of titanium-based alloy, which has not yet been reported so far.

### SUMMARY

A main object of the present invention is to provide a titanium-based alloy powder, a preparation method thereof, and a method for preparing a titanium-based alloy part. The titanium-based alloy powder is nearly spherical, and is obtained by shaping a hydride-dehydride (HDH) titanium powder and micro-alloying by using interstitial atoms and/or alloy elements at a certain temperature, which significantly improves the sphericity and flow properties of non-spherical HDH titanium powder, meeting powder requirements of the selective laser melting process, and has low preparation cost. The prepared titanium-based alloy part has an ultra-fine grain microstructure and a heterogeneous nanostructure, and meanwhile has the characteristics of high strength and high ductility, so as to solve the technical problems of insufficient fluidity of titanium-based alloy powder and high cost in the prior art.

In order to achieve the above object, according to a first aspect of the present invention, a titanium-based alloy powder is provided.

The composition of the titanium-based alloy powder is TiₐX_{b}M_{c}, where a, b, and c respectively represent weight percentages of Ti, X and M in the titanium-based alloy powder, 0<a<100, 0<b≤5, 0≤c≤1, and a+b+c=100; X is interstitial atoms; M is at least one alloy element, not titanium, and is different from X element; and the titanium-based alloy powder is obtained by using the interstitial atoms and/or alloy elements to shape and micro-alloy hydride-dehydride titanium powder at a certain temperature.

Further, the interstitial atoms are N atom or O atom or a combination of the two.

Further, the alloy elements include main group II-VI elements and transition elements.

Further, the main group II~VI elements include at least one of Si, Al, P, Ga, In, Sn, Pb, Ge, As, Sb, Te, Mg and Ca; and the transition elements include at least one of V, Mn, Fe, Co, Ni, Cu, Zn, Au, Ag, Pd, Pt, Cd, Ru, Cr, W, Mo, Y and rare earth elements.

Further, the alloy elements include at least one of Al and V

In order to achieve the above object, according to a second aspect of the present invention, a method for preparing titanium-based alloy powder is provided.

The method for preparing the titanium-based alloy powder includes the following steps:
S1: when c=0, weighing non-spherical hydride-dehydride titanium powder and grinding balls, and loading them into a rotary tube furnace; and when c≠0, weighing non-spherical hydride-dehydride titanium powder, alloy element powder and grinding balls, and loading them into a rotary tube furnace;
S2: introducing a mixed gas of a protective gas and a gas containing the interstitial atoms into the rotary tube furnace, and then heating up until the interstitial atoms uniformly reacts with the non-spherical hydride-dehydride titanium powder, or the interstitial atoms uniformly reacts with the non-spherical hydride-dehydride titanium powder and the alloy element powder; and
S3: introducing a protective gas into the rotary tube furnace, then heating up until the interstitial atoms and the non-spherical hydride-dehydride titanium powder are fully solid-dissolved, or the interstitial atoms, the non-spherical hydride-dehydride titanium powder and the alloy powder are fully solid-dissolved, and then furnace cooling to obtain titanium-based alloy powder.

In this process, the N and O interstitial atoms are fully solid-dissolved; at the same time, the titanium powder is softened at a high temperature; under the action of the grinding balls, the hydride-dehydride titanium powder with irregular morphology is spheroidized, and the particle size is uniformized, which enhances the flow properties of the titanium powder; and the mixed powder after alloying and shaping is furnace cooled to room temperature in a protective atmosphere of argon gas.

Further, in step S1, the tube furnace rotates at a speed of 10-60rad/min; a particle size of the hydride-dehydride titanium powder is -325 mesh; a mass ratio of the grinding balls to the hydride-dehydride titanium powder is 0.5~2 : 1; or a mass ratio of the grinding balls to the mixed powder of the hydride-dehydride titanium powder and the alloy elements is 0.5~2 : 1.

Further, in step S2, the tube furnace is heated to 140-200°C at a heating rate of 5-10°C/min, and the temperature is held for 30min to 3h.

Further, in step S2, a volume fraction of the gas containing interstitial atoms is 0-15vol.%. In this step, an optimal value range of the volume fraction of the gas containing interstitial atoms is comprehensively determined according to the heating rate, the holding temperature and time set in the present invention; of course, corresponding adjustment may be made as required in actual operation.

Further, in step S2, the protective gas is argon gas.

Further, in step S3, the tube furnace is heated to 450-600°C at a heating rate of 5-10°C/min, and the temperature is held for 30min to 3h; and the protective gas is argon gas.

In order to achieve the above object, according to a third aspect of the present invention, a method for preparing a titanium-based alloy part is provided.

The method for preparing the titanium-based alloy part includes the following steps:
selecting the titanium-based alloy powder prepared by the above method for preparing the titanium-based alloy powder, and sieving to obtain powder with a particle size of -500 mesh; and
preparing a titanium-based alloy part by using a selective laser melting 3D printing device.

The sphericity and flow properties of the non-spherical HDH titanium powder are innovatively improved in the present invention through high-temperature ball milling, and alloy powder suitable for the selective laser melting process is obtained, thereby reducing the raw material cost; at the same time, mechanical properties of low-cost titanium-based alloy are further improved by micro-alloying interstitial and alloy elements in the process of high-temperature ball milling, which has an important application prospect for the entire metal material field.

In the present invention, high-temperature ball milling is used to shape the non-spherical hydride-dehydride (HDH) titanium powder, and N, O interstitial elements and alloy elements such as Al and V are micro-alloyed during the shaping process, thereby significantly improving mechanical properties of the SLM titanium-based part.

The present invention innovatively micro-alloys interstitial atoms and alloy elements for the titanium-based powder during the high-temperature shaping process of the powder, thereby significantly improving the mechanical properties of the SLM titanium-based part. Especially, a tensile strength of Ti_{98.5}Al_{0.5}O_{1.0} titanium-based alloy reaches 1500MPa, while the elongation exceeds 15%, and the comprehensive tensile properties are significantly superior to the existing titanium-based alloys.

The present invention has the following advantages.
(1) The preparation of nearly spherical titanium-based alloy powder can be realized by alloying and high-temperature shaping of hydride-dehydride powder, which is not only suitable for cost reduction and alloying treatment of powder for selective laser melting, but also is suitable for other powder metallurgy preparation methods.
(2) Under the action of micro-alloying interstitial atoms such as N and O and alloy elements such as Al and V, the prepared titanium-based alloy part has an ultra-fine grain microstructure and a heterogeneous nanostructure, and has the characteristics of high strength and high ductility.
(3) Through appropriate adjustment of alloy composition, contents of interstitial atoms, and subsequent technical means such as heat treatment, different mechanical properties can also be obtained by proper adjustment.
(4) The process method is simple, the preparation cycle is short, numerical control operations can be realized, and the preparation process is highly repeatable.

The present invention provides a method for preparing a titanium alloy part with high strength and high ductility based on high-temperature shaping and micro-alloying treatment of irregular titanium powder. The shaped powder meets the requirements of selective laser melting process, and can be widely used in fields of aerospace, biomedicine and military materials.

### BRIEF DESCRIPTION OF THE DRAWINGS

Upon reading the detailed description of preferred embodiments below, various other advantages and benefits will become clear to those skilled in the art. The drawings are only used for the purpose of illustrating the preferred embodiments, and should not be considered as a limitation to the present invention. Moreover, throughout the drawings, identical components are denoted by identical reference signs. In the drawings:
FIG. 1a is a scanning electron microscope photograph of titanium-based alloy powder prepared in an embodiment of the present invention before shaping;
FIG. 1b is a scanning electron microscope photograph of the titanium-based alloy powder prepared in the embodiment of the present invention after shaping;
FIG. 2a is a Möbius strip part prepared by selective laser melting (SLM) in the embodiment of the present invention;
FIG. 2b is an emblem part of University of Science and Technology Beijing prepared by the selective laser melting (SLM) in the embodiment of the present invention;
FIG. 3 is a tensile curve diagram of the parts prepared in the embodiments of the present invention; and
FIG. 4 is a performance comparison diagram of the parts prepared in the embodiments of the present invention.

### DETAILED DESCRIPTION

Hereinafter, exemplary embodiments of the present disclosure will be described in greater detail with reference to the accompanying drawings. Although the exemplary embodiments of the present disclosure are shown in the drawings, it should be understood that the present disclosure may be implemented in various forms and should not be limited by the embodiments set forth herein. On the contrary, these embodiments are provided to enable a more thorough understanding of the present disclosure and to fully convey the scope of the present disclosure to those skilled in the art.

The present invention discloses a titanium-based alloy powder strengthened by interstitial atoms, and the composition of the titanium-based alloy powder is TiₐX_{b}, where 0<a<100, 0<b≤5, and a+b=100; and X is interstitial atoms; specifically, the interstitial atoms are N atom, O atom or a combination of the two.

At the same time, the present invention also discloses a method for preparing a titanium-based alloy powder strengthened by interstitial atoms, which specifically includes the following steps:
S100: weighing non-spherical hydride-dehydride titanium powder and grinding balls, loading them into a rotary tube furnace, and making the tube furnace rotate at a speed of 10-60rad/min, in which a particle size of the hydride-dehydride titanium powder is -325 mesh, and a mass ratio of the grinding balls to the hydride-dehydride titanium powder is 0.5~2 : 1;
S200: introducing a mixed gas of argon gas and a gas containing interstitial atoms into the rotary tube furnace, heating up the tube furnace to 140-200°C at a heating rate of 5-10°C/min, and holding the temperature for 30min to 3h so that the interstitial atoms fully and uniformly react with the non-spherical hydride-dehydride titanium-based alloy powder; and
S300: introducing argon gas into the rotary tube furnace, heating up the tube furnace to 450-600°C at a heating rate of 5-10°C/min, and holding the temperature for 30min to 3h so that the interstitial atoms and the non-spherical hydride-dehydride titanium-based alloy powder are fully solid-dissolved, and then furnace cooling to obtain a titanium-based alloy powder strengthened by interstitial atoms.

Further, the present invention discloses a titanium-based alloy part and a method for preparing a titanium-based alloy part; specifically: the titanium-based alloy powder strengthened by interstitial atoms prepared by the above method is sieved to obtain a titanium-based alloy powder with a particle size of -500 mesh, and then a selective laser melting 3D printing device is used to prepare a titanium-based alloy part.

The present invention also discloses a titanium-based alloy powder strengthened by interstitial atoms and alloy elements, and the composition of the titanium-based alloy powder is TiₐX_{b}M_{c}, where 0<a<100, 0<b≤5, 0<c≤1, and a+b+c=100; X is N or O atom; and M is alloy elements; specifically, M includes main group II~VI elements and transition elements, and the main group II~VI elements include Si, Al, P, Ga, In, Sn, Pb, Ge, As, Sb, Te, Mg and Ca; and the transition elements include V, Mn, Fe, Co, Ni, Cu, Zn, Au, Ag, Pd, Pt, Cd, Ru, Cr, W, Mo, Y and rare earth elements.

As a preferred embodiment of the present invention, the alloy elements M are one or more of Al and V.

At the same time, the present invention also discloses a method for preparing a titanium-based alloy powder strengthened by interstitial atoms and alloy elements, which specifically includes the following steps:
S1: weighing non-spherical hydride-dehydride titanium powder, alloy element powder and grinding balls, loading them into a rotary tube furnace, and making the tube furnace rotate at a speed of 10-60rad/min, in which a particle size of the hydride-dehydride titanium powder is -325 mesh, and a mass ratio of the grinding balls to the mixed powder of the hydride-dehydride titanium powder and the alloy elements is 0.5~2 : 1;
S2: introducing a mixed gas of argon gas and a gas containing interstitial atoms into the rotary tube furnace, heating up the tube furnace to 140-200°C at a heating rate of 5-10°C/min, and holding the temperature for 30min to 3h so that the interstitial atoms fully and uniformly react with the non-spherical hydride-dehydride titanium powder and the alloy element powder to obtain a mixed powder; and
S3: introducing argon gas into the rotary tube furnace, heating up the tube furnace to 450-600°C at a heating rate of 5-10°C/min, and holding the temperature for 30min to 3h so that the interstitial atoms and the mixed powder are fully solid-dissolved, and then furnace cooling to obtain an alloyed titanium-based alloy powder.

Further, the present invention discloses a titanium-based alloy part and a method for preparing a titanium-based alloy part; specifically: the alloyed titanium-based alloy powder prepared by the above method is sieved to obtain a titanium-based alloy powder with a particle size of -500 mesh, and then a selective laser melting 3D printing device is used to prepare a titanium-based alloy part.

In the following, the TiₐX_{b} series interstitial atom-alloyed titanium-based alloy powder and parts thereof as well as the preparation process of the TiₐX_{b}M_{c} series interstitial atom-alloyed titanium-based alloy powder and parts thereof in the present disclosure will be described in detail through specific examples.

The preparation process of the TiₐX_{b} series interstitial atom-alloyed titanium-based alloy powder and parts thereof will be described as follows.

### Example 1:

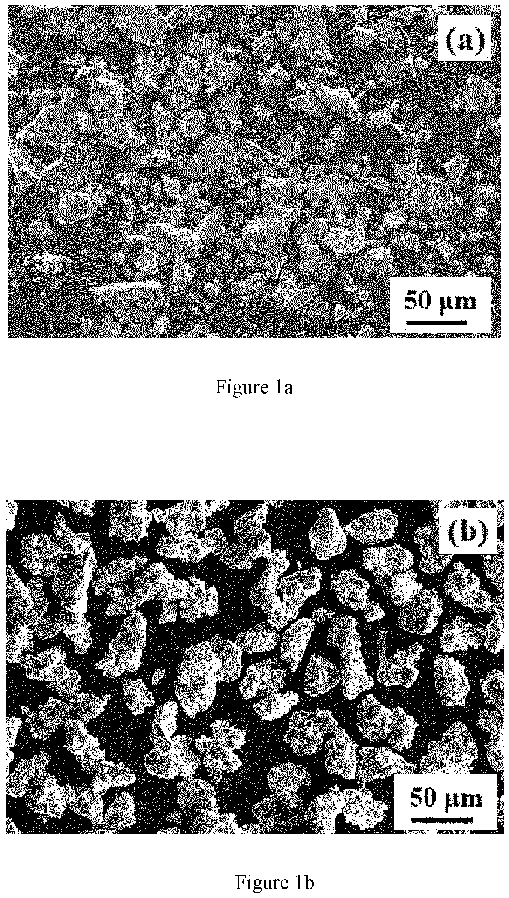

Hydride-dehydride titanium powder was used as raw material, with the particle size of the hydride-dehydride titanium powder being -325 mesh. The titanium powder and zirconia grinding balls were put into a tubular quartz boat with a mass ratio of the balls and the raw material being 1 : 1. The quartz boat was put into a rotary sintering furnace and was heated up to 160°C at 5°C/min, and the temperature was held for 30min. The whole process was performed in a mixed atmosphere of argon gas and oxygen gas (a volume fraction of the oxygen gas being 10vol.%). After the temperature-holding was completed, the atmosphere was changed to a pure argon protective atmosphere, and the temperature was increased to 450°C at a heating rate of 5°C/min. The temperature was held for 60mins to promote full solid-dissolving of O in the powder. At the same time, under a combined action of mechanical force and high temperature, the irregular morphology of the hydride-dehydride powder was spheroidized, the particle size was uniformized, and alloyed titanium-based alloy powder was obtained after cooling. The morphology of the powder is shown in FIG. 1b. The powder is nearly spherical, and irregular acute angles disappear.

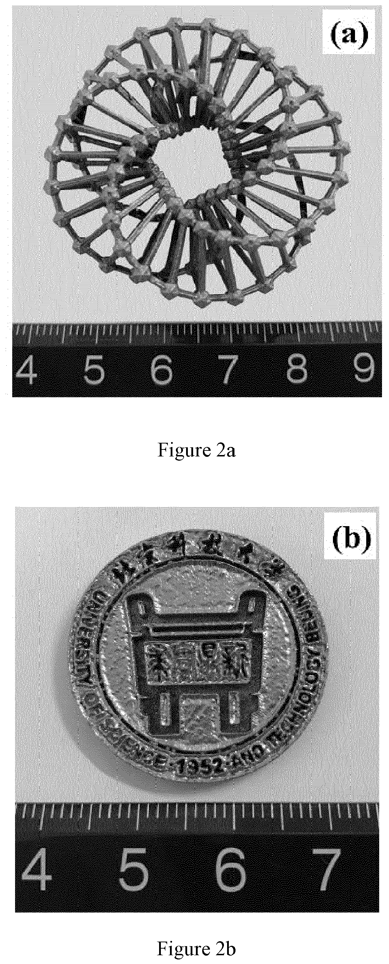

The alloyed titanium-based alloy powder was sieved to obtain -500 mesh powder. Using a SLM-125 selective laser melting 3D printing device, complex titanium-based parts can be prepared without defects such as bending, as shown in FIGs. 2a and 2b.

### Example 2:

Hydride-dehydride titanium powder was used as raw material, with the particle size of the hydride-dehydride titanium powder being -325 mesh. The titanium powder and zirconia grinding balls were put into a tubular quartz boat with a mass ratio of the balls and the raw material being 0.5 : 1. The quartz boat was put into a rotary sintering furnace and was heated up to 200°C at 10°C/min, and the temperature was held for 3h. The whole process was performed in a mixed atmosphere of argon gas and nitrogen gas (a volume fraction of the nitrogen gas being 10vol.%). After the temperature-holding was completed, the atmosphere was changed to a pure argon protective atmosphere, and the temperature was increased to 600°C at a heating rate of 10°C/min. The temperature was held for 3h to promote full solid-dissolving of N in the powder. At the same time, under a combined action of mechanical force and high temperature, the irregular morphology of the hydride-dehydride powder was spheroidized, the particle size was uniformized, and alloyed titanium-based alloy powder was obtained after cooling. The powder is nearly spherical, and irregular acute angles disappear.

Example 3 ~ Example 12 respectively disclose a TiₐX_{b} series interstitial atom-alloyed titanium-based alloy powder and a part thereof, in which the same preparation process as that of Example 1 was adopted, except that the alloy compositions of the alloy powders were different. The alloy compositions of the TiₐX_{b} series interstitial atom-alloyed titanium-based alloy powders in Examples 1 - 12 are now summarized. For details, see Table 1.

**Table 1**

| Group | Example 1 | Example 2 | Example 3 | Example 4 | Example 5 | Example 6 |
|---|---|---|---|---|---|---|
| alloy composition (wt.%) | Ti_{99.5}O_{0.5} | Ti₉₉N_{1.0} | Ti_{99.75}O_{0.25} | Ti₉₉O_{1.0} | Ti_{98.5}O_{1.5} | Ti₉₈O_{2.0} |

| Group | Example 7 | Example 8 | Example 9 | Example 10 | Example 11 | Example 12 |
|---|---|---|---|---|---|---|
| alloy composition (wt.%) | Ti_{97.5}O_{2.5} | Ti_{99.75}N_{0.25} | Ti_{99.5}N_{0.5} | Ti_{98.5}N_{1.5} | Ti₉₈N_{2.0} | Ti_{97.5}N_{2.5} |

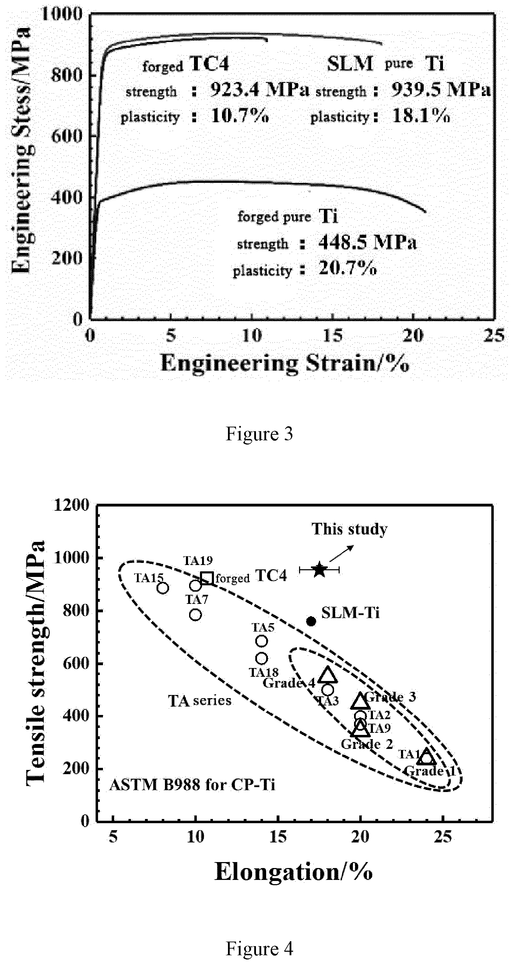

The mechanical properties of the interstitial atom-alloyed titanium-based alloy parts prepared in Examples 1 - 12 are summarized below. For details, see Table 2 and FIGs. 3 and 4.

**Table 2**

| Group | Example 1 | Example 2 | Example 3 | Example 4 | Example 5 | Example 6 |
|---|---|---|---|---|---|---|
| tensile yield strength σ_{y} (MPa) | 939.5 | 1166 | 755 | 1020 | 1225 | 1359 |
| tensile ductility ε (%) | 18.1 | 15.9 | 20.1 | 16.8 | 8.2 | 5.6 |

| Group | Example 7 | Example 8 | Example 9 | Example 10 | Example 11 | Example 12 |
|---|---|---|---|---|---|---|
| tensile yield strength σ_{y} (MPa) | 1461 | 736 | 899 | 1211 | 1316 | 1565 |
| tensile ductility ε (%) | 1.3 | 19.8 | 17.1 | 7.3 | 4.9 | 1.6 |

It can be seen from Table 2 in conjunction with FIG. 3 that in Example 1, due to the solid-dissolving of a small amount of O interstitial atoms, the mechanical properties of the prepared pure Ti part are significantly improved: the tensile strength reaches 939.5MPa, and the elongation is 18.1%. Its strength is about 1.5 times that of Grade 4 pure titanium (Grade 4 CP-Ti, 550MPa), and reaches the strength of forged Ti-6Al-4V (TC4) (923.4 MPa). Its ductility is substantially comparable to that of Grade 4 pure titanium (18%), being about 2 times that of Ti-6A1-4V (10.7%). As compared with a selective laser melting titanium part (SLM-Ti), the strength is increased by about 150MPa without substantially reducing the ductility. In addition, as compared with other pure titanium, such as Grade 1 pure titanium (Grade 1 CP-Ti, 240MPa, 24%), Grade 2 pure titanium (Grade 2 CP-Ti, 345MPa, 20%), Grade 3 pure titanium (Grade 3 CP-Ti, 450MPa, 20%) and other α-type titanium alloys, such as TA19 (Ti-6Al-2Sn-4Zr-2Mo-0.1Si, 930MPa, 11%), TA7 (Ti-5Al-2.5Sn, 785MPa, 11%), TA5 (Ti-4Al-0.005B, 680MPa, 14%), TA18 (Ti-3Al-2.5V, 620MPa, 14%), the strength of the alloy prepared by the present invention is significantly improved while maintaining the substantially comparable ductility, or the ductility of the alloy prepared by the present invention is significantly improved while maintaining the substantially comparable strength, so that a titanium-based alloy with both high strength and high ductility is obtained, as specifically shown in FIG. 4.

The preparation process of the TiₐX_{b}M_{c} series interstitial atom-alloyed titanium-based alloy powder and parts thereof will be described as follows.

### Example 13:

Hydride-dehydride titanium powder and Al powder were used as raw material, with the particle size of the hydride-dehydride titanium powder being -325 mesh, and an average particle size of the Al powder being 2µm. The raw material and zirconia grinding balls were put together into a tubular quartz boat with a mass ratio of the balls and the raw material being 1 : 1. The quartz boat was put into a rotary sintering furnace and was heated up to 200°C at 5°C/min, and the temperature was held for 30min. The whole process was performed in a mixed atmosphere of argon gas and oxygen gas (a volume fraction of the oxygen gas being 8vol.%). After the temperature-holding was completed, the atmosphere was changed to a pure argon protective atmosphere, and the temperature was increased to 500°C at a heating rate of 5°C/min. The temperature was held for 60min to promote full solid-dissolving of O in the powder and full alloying of the Al metal powder and Ti. At the same time, under a combined action of mechanical force and high temperature, the irregular morphology of the hydride-dehydride powder was spheroidized, the particle size was uniformized, and alloyed titanium-based alloy powder was obtained after cooling.

After sieving, -500 mesh alloyed powder was obtained. Using a SLM-125 selective laser melting 3D printing device, a titanium-based alloy part was prepared.

### Example 14:

Hydride-dehydride titanium powder and V powder were used as raw material, with the particle size of the hydride-dehydride titanium powder being -325 mesh, and an average particle size of the V powder being 2µm. The raw material and zirconia grinding balls were put together into a tubular quartz boat with a mass ratio of the balls and the raw material being 0.5 : 1. The quartz boat was put into a rotary sintering furnace and was heated up to 200°C at 10°C/min, and the temperature was held for 3h. The whole process was performed in a mixed atmosphere of argon gas and nitrogen gas (a volume fraction of the nitrogen gas being 10vol.%). After the temperature-holding was completed, the atmosphere was changed to a pure argon protective atmosphere, and the temperature was increased to 600°C at a heating rate of 10°C/min. The temperature was held for 3h to promote full solid-dissolving of N in the powder. At the same time, under a combined action of mechanical force and high temperature, the irregular morphology of the hydride-dehydride powder is spheroidized, the particle size is uniformized, and alloyed titanium-based alloy powder was obtained after cooling. The powder is nearly spherical, and irregular acute angles disappear.

After sieving, -500 mesh alloyed powder was obtained. Using a SLM-125 selective laser melting 3D printing device, a titanium-based alloy part was prepared.

Example 15 ~ Example 20 respectively disclose a TiₐX_{b}M_{c} series interstitial atom-alloyed titanium-based alloy powder and a part thereof, in which the same preparation process as that of Example 13 was adopted, except that the alloy compositions of the alloy powders were different. The alloy compositions of the TiₐX_{b}M_{c} series interstitial atom-alloyed titanium-based alloy powders in Examples 13 - 20 are now summarized. For details, see Table 3.

**Table 3**

| Group | Example 13 | Example 14 | Example 15 | Example 16 |
|---|---|---|---|---|
| alloy composition (wt.%) | Ti_{98.5}Al_{0.5}O_{1.0} | Ti_{98.5}V_{0.5}N_{1.0} | Ti₉₈Al_{0.5}O_{1.5} | Ti_{98.5}Al_{0.5}N_{1.0} |

| Group | Example 17 | Example 18 | Example 19 | Example 20 |
|---|---|---|---|---|
| alloy composition (wt.%) | Ti₉₈Al_{0.5}N_{1.5} | Ti₉₈V_{0.5}N_{1.5} | Ti_{98.5}V_{0.5}O_{1.0} | Ti₉₈V_{0.5}O_{1.5} |

The mechanical properties of the interstitial atom-alloyed titanium-based alloy parts prepared in Example 13 ~ Example 20 are summarized below. For details, see Table 4.

**Table 4**

| Group | Example 13 | Example 14 | Example 15 | Example 16 |
|---|---|---|---|---|
| tensile yield strength σ_{y} (MPa) | 1495 | 1412 | 1595 | 1477 |
| tensile ductility ε (%) | 15.1 | 12.7 | 6.1 | 14.9 |

| Group | Example 17 | Example 18 | Example 19 | Example 20 |
|---|---|---|---|---|
| tensile yield strength σ_{y} (MPa) | 1688 | 1644 | 1433 | 1599 |
| tensile ductility ε (%) | 5.1 | 4.7 | 11.9 | 4.5 |

It can be seen from Table 4 that in Example 13, free diffusion of interstitial O atoms is hindered under the action of Al alloy element, thereby forming a heterogeneous nanostructure, which further improves the mechanical properties of the prepared part, which has a tensile strength of 1495MPa and an elongation of 15.1%. As the oxygen element continues to increase, the strength of the part increases, but the ductility decreases sharply. When 1.5wt.% O is added, the strength is 1595MPa and the elongation is 6.1%.

Described above are only preferred specific embodiments of the present disclosure, but the scope of protection of the present disclosure is not limited thereto. Any change or replacement that can be easily conceived by those skilled in the art within the technical scope disclosed in the present disclosure shall be covered within the scope of protection of the present disclosure. Therefore, the scope of protection of the present disclosure shall be subject to the scope of protection of the claims.

## Claims

1. A titanium-based alloy powder, wherein the composition of the titanium-based alloy powder is TiₐX_{b}M_{c}, where a, b, and c respectively represent weight percentages of Ti, X and M in the titanium-based alloy powder, 0<a<100, 0<b≤5, 0≤c≤1, and a+b+c=100; X is interstitial atoms; M is at least one alloy element, not titanium, and is different from X element; and the titanium-based alloy powder is obtained by using the interstitial atoms and/or alloy elements to shape and micro-alloy hydride-dehydride titanium powder at a certain temperature.

2. The titanium-based alloy powder according to claim 1, wherein the interstitial atoms are N atom or O atom or a combination of the two.

3. The titanium-based alloy powder according to claim 1, wherein the alloy elements comprise at least one of main group II~VI elements and transition elements.

4. The titanium-based alloy powder according to claim 3, wherein the main group II~VI elements comprise at least one of Si, Al, P, Ga, In, Sn, Pb, Ge, As, Sb, Te, Mg and Ca; and the transition elements comprise at least one of V, Mn, Fe, Co, Ni, Cu, Zn, Au, Ag, Pd, Pt, Cd, Ru, Cr, W, Mo, Y and rare earth elements.

5. The titanium-based alloy powder according to claim 4, wherein the alloy elements comprise at least one of Al and V.

6. The titanium-based alloy powder according to claim 1, wherein the composition of the titanium-based alloy powder is TiₐX_{b}M_{c}, where 98<a<100, 0<b≤2.5, 0≤c≤1, and a+b+c=100.

7. A method for preparing the titanium-based alloy powder according to any one of claims 1 to 6, comprising the following steps:
S1: when c=0, weighing non-spherical hydride-dehydride titanium powder and grinding balls, and loading them into a rotary tube furnace; and when c≠0, weighing non-spherical hydride-dehydride titanium powder, alloying element powder and grinding balls, and loading them into a rotary tube furnace;
S2: introducing a mixed gas of a protective gas and a gas containing the interstitial atoms into the rotary tube furnace, and then heating up until the interstitial atoms uniformly reacts with the non-spherical hydride-dehydride titanium powder, or the interstitial atoms uniformly reacts with the non-spherical hydride-dehydride titanium powder and the alloying element powder; and
S3: introducing a protective gas into the rotary tube furnace, then heating up until the interstitial atoms and the non-spherical hydride-dehydride titanium powder are fully solid-dissolved, or the interstitial atoms, the non-spherical hydride-dehydride titanium powder and the alloying element powder are fully solid-dissolved, and then furnace cooling to obtain titanium-based alloy powder.

8. The method for preparing the titanium-based alloy powder according to claim 7, wherein in step S1, the tube furnace rotates at a speed of 10-60rad/min; a particle size of the hydride-dehydride titanium powder is -325 mesh; a mass ratio of the grinding balls to the hydride-dehydride titanium powder is 0.5~2 : 1; or a mass ratio of the grinding balls to the mixed powder of the hydride-dehydride titanium powder and the alloying elements is 0.5~2 : 1.

9. The method for preparing the titanium-based alloy powder according to claim 7, wherein in step S2, the tube furnace is heated to 140-200°C at a heating rate of 5-10°C/min, and the temperature is held for 30min to 3h.

10. The method for preparing the titanium-based alloy powder according to claim 7, wherein in step S3, the tube furnace is heated to 450-600°C at a heating rate of 5-10°C/min, and the temperature is held for 30min to 3h; and the protective gas is argon gas.

11. A method for preparing a titanium-based alloy part, comprising the following steps:
selecting the titanium-based alloy powder prepared by the method for preparing the titanium-based alloy powder according to any one of claims 7 to 10, and sieving to obtain powder with a particle size of -500 mesh; and
preparing a titanium-based alloy part by using a selective laser melting 3D printing device.
